# EUROPEAN PATENT SPECIFICATION

(11) **EP 4 303 465 B1**
(45) Date of publication and mention of the grant of the patent: **12.03.2025**
(21) Application number: 23179225.0
(22) Date of filing: 14.06.2023
(51) Int. Cl.: F16H 1/32, F16H 49/00, F16H 57/029, F16H 57/04, F16J 15/3208, B60K 7/00, F16J 15/3204, B60K 17/04, F16H 57/02

(54) **WHEEL DRIVE DEVICE**
RADANTRIEBSVORRICHTUNG
DISPOSITIF D'ENTRAÎNEMENT DE ROUE

(30) Priority: 08.07.2022 JP 2022110249
(43) Date of publication of application: 10.01.2024
(73) Proprietor: Sumitomo Heavy Industries, Ltd., Tokyo 141-6025 (JP)
(72) Inventor: NAGASAKI, Terumasa, Kanagawa, 237-8555 (JP); HIROSE, Takuya, Obu-shi Aichi, 474-8501 (JP); RAUH, Franz, 85229 Markt Indersdorf (DE)
(74) Representative: Louis Pöhlau Lohrentz

(56) References cited:
- JP-A- 2016 178 787
- JP-A- 2018 144 778
- US-A1- 2020 096 089

## Description

### BACKGROUND OF THE INVENTION

### Field of the Invention

The present invention relates to a wheel drive device.

### Description of Related Art

In Japanese Unexamined Patent Publication No. 2018-144778, a wheel drive device including a rotating body including a wheel, a fixed body that rotates relative to the rotating body, a seal member that is disposed between the rotating body and the fixed body and seals a sealing space containing a lubricant, and an oil receiving member that receives the lubricant that has leaked beyond the seal member is disclosed. In United States Patent Publication No. 2020-096089, a planetary gear device including an internal gear, a planetary gear engaging with the internal gear, a sun gear positioned at a center of the internal gear and engaging with the planetary gear, a planetary carrier rotatably supporting the planetary gear in a state in which the planetary gear engages with the internal gear and the sun gear, a bearing inner cylinder comprising the internal gear on an inner circumferential surface, a bearing coaxially fitting in an outer circumference of the bearing inner cylinder, an output shaft outer cylinder coaxially fitting in an outer circumference of the bearing, and an output shaft end plate that fixes the planetary carrier and that is supported by the output shaft outer cylinder is disclosed.

### SUMMARY OF THE INVENTION

The inventors of the present application have found a new idea for reducing axial dimensions of the entire wheel drive device while increasing a storage volume of the lubricant by the oil receiving member.

One of objects of the present invention is to provide a technique capable of reducing the axial dimensions of the entire wheel drive device while increasing the storage volume of the lubricant by the oil receiving member.

The aforementioned object is achieved by wheel devices according to the independent claims.

A first form of the present invention is disclosed in the independent claim 1.

A second form of the present invention is disclosed in the independent claim 2.

Particular embodiments of the present invention are disclosed in the appended dependent claims.

It is noted that, due to the nature of a "relative rotation", it is equivalent to say that the rotating body rotates relative to the fixed body or that the fixed body rotates relative to the rotating body.

According to the present invention, it is possible to reduce the axial dimensions of the entire wheel drive device while increasing the storage volume of the lubricant by the oil receiving member.

### BRIEF DESCRIPTION OF THE DRAWINGS

Fig. 1 is a side sectional view illustrating a power transmission device of a first embodiment.
Fig. 2 is a side sectional view illustrating a speed reducer of the first embodiment.
Fig. 3 is an enlarged view of a part of Fig. 2.
Fig. 4 is an explanatory view of a propagation location of a lubricant.

### DETAILED DESCRIPTION OF THE INVENTION

Hereinafter, embodiments will be described. The same reference numerals are added to the same components, and duplicated description will be omitted. In each drawing, components are omitted, enlarged, or reduced as appropriate for convenience of explanation. The drawings shall be viewed according to the orientation of the reference numerals.

### First Embodiment

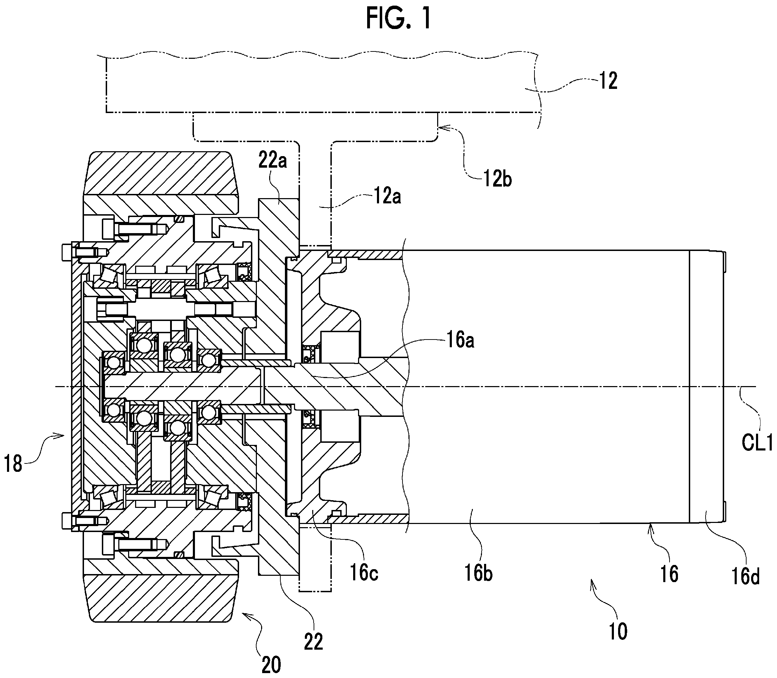

Fig. 1 is referred to. A wheel drive device 10 is attached to a vehicle body 12 such as a transport cart and is used to drive a wheel 20. The transport cart is, for example, an automatic guided vehicle (AGV), an autonomous mobile robot (AMR), or the like. A use of the wheel drive device 10 of the present disclosure is not limited to the transport cart, and can be applied to various vehicles, such as a forklift and a self-propelled service robot.

The wheel drive device 10 includes a motor 16, a speed reducer 18 to which input rotation is input from an output shaft 16a of the motor 16, a wheel 20 to which output rotation is output from the speed reducer 18, and an attachment member 22 that is disposed between the motor 16 and the speed reducer 18 and is attached to the vehicle body 12. Hereinafter, a direction along a rotation center line CL1 of the wheel 20 is referred to as an axial direction, and a radial direction and a circumferential direction having the rotation center line as the center of a circle are simply referred to as a radial direction and a circumferential direction.

The motor 16 includes a tubular-shaped motor frame 16b and a pair of covers 16c and 16d that cover opening end portions of the motor frame 16b. The pair of covers 16c and 16d include a load-side cover 16c disposed on the speed reducer 18 side and a counter load-side cover 16d disposed on a side opposite to the speed reducer 18.

The attachment member 22 forms an annular shape as a whole. The attachment member 22 includes an attachment portion 22a for attaching to the vehicle body 12. The attachment portion 22a in the present embodiment protrudes outwardly in the radial direction from the motor 16. The attachment member 22 is attached to the vehicle body 12 by being connected to an attached portion 12a by a bolt (not illustrated) in a state where the attachment portion 22a is abutted against the attached portion 12a provided on the vehicle body 12. The attached portion 12a may be provided on a component 12b to be attached to the vehicle body 12, or may be provided on the vehicle body 12 itself.

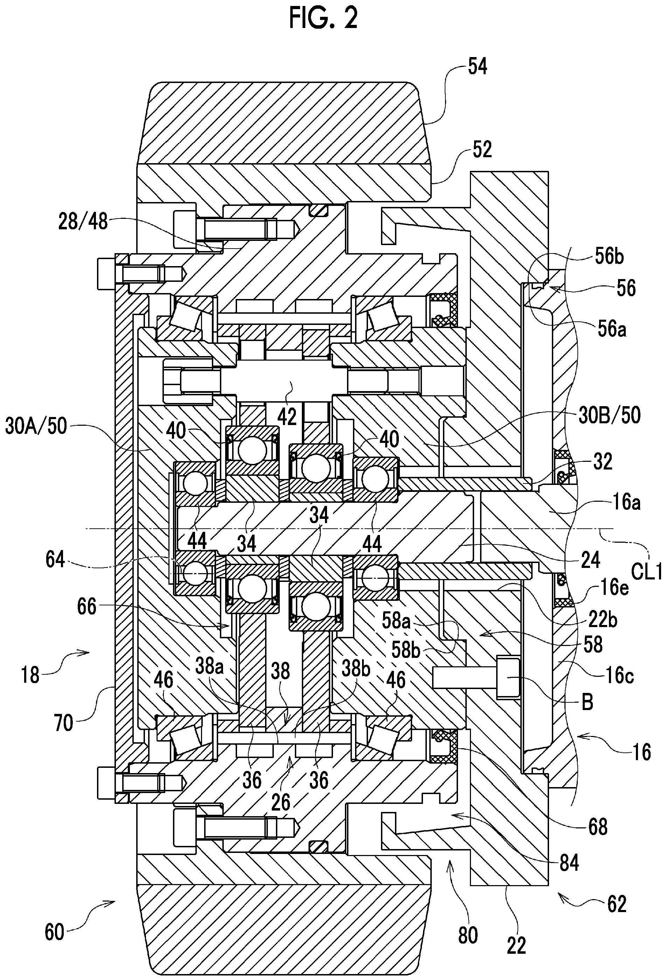

Fig. 2 is referred to. The speed reducer 18 includes an input shaft 24 to which input rotation is input from the output shaft 16a of the motor 16, a reduction mechanism 26 that decelerates the input rotation transmitted from the input shaft 24 and that converts the input rotation into output rotation, a casing 28 that accommodates the reduction mechanism 26, and carriers 30A and 30B disposed inside the casing 28 in the radial direction are provided. The input shaft 24 is connected to the output shaft 16a of the motor 16 using a joint member 32 such as a spline joint.

The speed reducer 18 in the present embodiment is an eccentric oscillation type speed reducer. The input shaft 24 of the speed reducer 18 is a crankshaft having at least one (here, two) eccentric body 34. Eccentric phases of a plurality of eccentric bodies 34 are offset from each other. The input shaft 24 and the eccentric body 34 may be either separate or integral.

The reduction mechanism 26 of the eccentric oscillation type speed reducer includes an external gear 36 that oscillates by the eccentric body 34 and an internal gear 38 that meshes with the external gear 36. The external gear 36 is individually provided corresponding to each of the plurality of eccentric bodies 34, and is supported by the eccentric body 34 to be relatively rotatable through an eccentric body bearing 40. The internal gear 38 in the present embodiment includes an internal gear main body 38a integrated with the casing 28, and an outer pin 38b provided on an inner peripheral portion of the internal gear main body 38a and constituting internal teeth.

The carriers 30A and 30B are disposed on one side in the axial direction of the reduction mechanism 26. The carriers 30A and 30B in the present embodiment include a first carrier 30A disposed on one side in the axial direction and a second carrier 30B disposed on the other side in the axial direction. The carriers 30A and 30B are connected through a connection member 42 such as a pin. The carriers 30A and 30B support the input shaft 24 through an input bearing 44. A main bearing 46 is disposed between the casing 28 and the carriers 30A and 30B.

The speed reducer 18 described above includes an output member 48 to which output rotation is transmitted from the reduction mechanism 26 and outputting the output rotation, and a fixing member 50 that rotates relative to the output member 48 when the output member 48 rotates. The fixing member 50 is fixed to the vehicle body 12 through the attachment member 22. The output member 48 in the present embodiment forms a tubular shape as a whole. The output member 48 in the present embodiment is the casing 28 and the fixing member 50 is the carriers 30A and 30B. Alternatively, the output member 48 may be either the carrier 30A or the carrier 30B, and the fixing member 50 may be the casing 28.

The wheel 20 travels on a traveling surface by being rotated by the output rotation output from the output member 48. For example, the traveling surface is a floor surface of a building, a rail, or the like. The wheel 20 includes a wheel member 52 that is connected to the output member 48 by using bolts or the like, and a ground contact member 54 that is attached to an outer peripheral portion of the wheel member 52. The wheel member 52 forms a tubular shape as a whole. The ground contact member 54 contacts the traveling surface when the wheel 20 travels. The ground contact member 54 in the present embodiment is a tire. Specific examples of the ground contact member 54 are not particularly limited, and in addition, a roller for an omni wheel, a roller for a mecanum wheel, or the like may be used.

The attachment member 22 functions as an adapter that connects the motor 16 and the speed reducer 18. The attachment member 22 is connected to a flange portion (not illustrated) provided on a load-side cover 16c of the motor 16 using a bolt (not illustrated). The attachment member 22 is connected to the fixing member 50 of the speed reducer 18 using a bolt B. The attachment member 22 is connected to the fixing member 50 in a state in which a side surface portion of the attachment member 22 is abutted against a side surface portion of the fixing member 50. Accordingly, the attachment member 22 is attached to the vehicle body 12 in a state in which each of the motor 16 and the speed reducer 18 is supported. The attachment member 22 is provided with a through-hole 22b that penetrates in the axial direction, and the output shaft 16a of the motor 16 and the input shaft 24 of the speed reducer 18 are inserted through the through-hole 22b.

The attachment member 22 and the motor 16 include a motor-side spigot joint portion 56 in which a first inner peripheral spigot surface 56a and a first outer peripheral spigot surface 56b are spigot-fitted. In the present embodiment, the first inner peripheral spigot surface 56a is provided on the attachment member 22, and the first outer peripheral spigot surface 56b is provided on the load-side cover 16c of the motor 16, but the reverse is also possible. The attachment member 22 and the fixing member 50 of the speed reducer 18 include a speed reducer-side spigot joint portion 58 in which a second inner peripheral spigot surface 58a and a second outer peripheral spigot surface 58b are spigot-fitted. In the present embodiment, the second inner peripheral spigot surface 58a is provided on the fixing member 50 and the second outer peripheral spigot surface 58b is provided on the attachment member 22, but the reverse is also possible.

An operation of the wheel drive device 10 described above will be described. In a case where the input rotation is input from the motor 16 to the input shaft 24 of the speed reducer 18, the reduction mechanism 26 operates. In a case where the reduction mechanism 26 operates, the output rotation decelerated with respect to the input rotation from the reduction mechanism 26 is transmitted to the output member 48. In a case where the output rotation is transmitted to the output member 48, the wheel 20 rotates together with the output member 48, and the wheel 20 travels on the traveling surface.

In a case where the eccentric oscillation type speed reducer 18 is used as in the present embodiment, in a case where the input shaft 24 (crankshaft) rotates, the eccentric body 34 causes the external gear 36 to oscillate so that the center of the external gear 36 rotates around a rotation center line CL1 of the output member 48. In a case where the external gear 36 is oscillated, meshing positions of the external gear 36 and the internal gear 38 change in the circumferential direction. Accordingly, each time the input shaft 24 rotates once, one of the external gear 36 and the internal gear 38 (here, the internal gear 38) rotates by a difference in the number of teeth between the external gear 36 and the internal gear 38. The axial rotation component is transmitted to the output member 48 as output rotation.

The wheel drive device 10 described above includes a rotating body 60 including the wheel 20, a fixed body 62 that rotates relative to the rotating body 60 when the rotating body 60 rotates, and a seal member 68 that is disposed between the rotating body 60 and the fixed body 62 and that seals a sealing space 66 containing a lubricant 64. In the present embodiment, the rotating body 60 is the wheel 20 and the output member 48 (casing 28), and the fixed body 62 is the fixing member 50 (carriers 30A and 30B) and the attachment member 22.

The sealing space 66 is provided as an internal space of the wheel drive device 10. In the sealing space 66 in the present embodiment, the reduction mechanism 26 of the speed reducer 18 is accommodated and is provided at least at a location surrounded by the casing 28 and carriers 30A and 30B. The sealing space 66 in the present embodiment is sealed by a seal cover 70 that closes a counter motor-side opening portion of the tubular-shaped casing 28 and an oil seal 16e that is disposed between the output shaft 16a of the motor 16 and the load-side cover 16c, in addition to the seal member 68. The lubricant 64 is used for lubricating the reduction mechanism 26. The lubricant 64 in the present embodiment is a lubricating oil, but may be grease or the like.

The seal member 68 in the present embodiment is disposed between the casing 28 which is a part of the rotating body 60 and the second carrier 30B which is a part of the fixed body 62. The seal member 68 is a contact type seal such as a lip seal and an O-ring, and is a lip seal in this case. The seal member 68 is composed of an elastic body such as rubber.

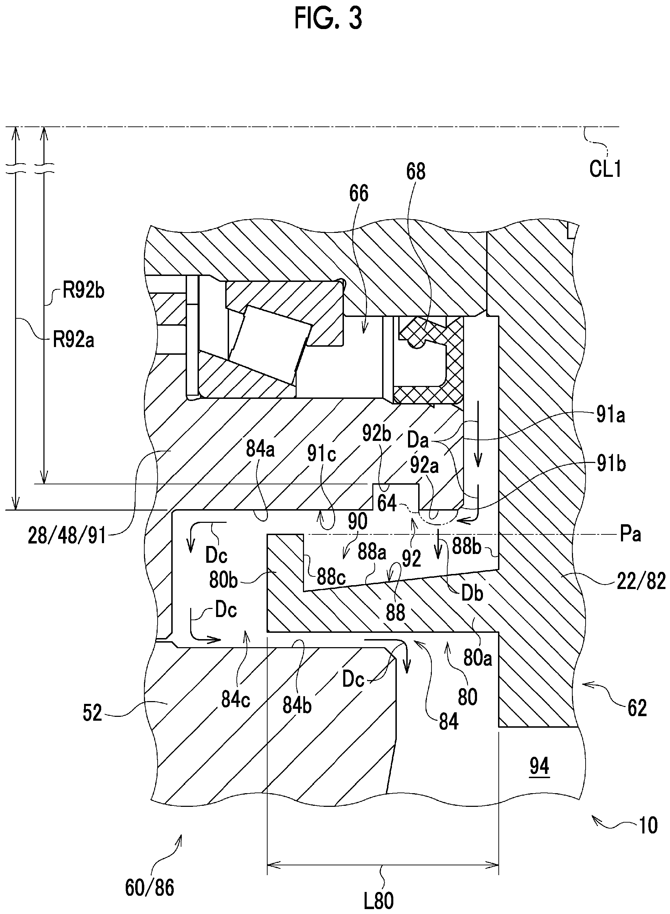

Figs. 2 and 3 are referred to. The wheel drive device 10 includes an oil receiving member 80 that receives the lubricant 64 that has leaked beyond the seal member 68. Leakage beyond the seal member 68 as used herein means that the lubricant 64 leaks outward from the sealing space 66 containing the lubricant 64 through the location where the seal member 68 is disposed.

The oil receiving member 80 is provided on the attachment member 22 which is a part of the fixed body 62. The oil receiving member 80 in the present embodiment is integrally molded as a part of the same member as a mating member 82 (here, the attachment member 22) to which the oil receiving member 80 is provided, but it may be provided separately from the mating member 82.

The oil receiving member 80 in the present embodiment includes an axial wall portion 80a that extends in the axial direction from the mating member 82 in which the oil receiving member 80 is provided, and an outer wall portion 80b that protrudes inwardly in the radial direction from an outer end portion of the axial wall portion 80a. The oil receiving member 80 is provided to protrude in the axial direction from the mating member 82 as a whole.

At least a part of the oil receiving member 80 is disposed inside an axial recessed portion 84 formed in one of the rotating body 60 and the fixed body 62 (here, the rotating body 60). Hereinafter, one of the rotating body 60 and the fixed body 62 in which the axial recessed portion 84 is formed is referred to as a recessed portion forming body 86. The axial recessed portion 84 is formed outwardly in the radial direction from the seal member 68 in the recessed portion forming body 86. The axial recessed portion 84 is recessed from a side surface portion of the recessed portion forming body 86 toward one side in the axial direction (here, a counter motor side), and is continuous in an annular shape. The axial recessed portion 84 forms a radial gap 84c between an upper surface portion 84a and a lower surface portion 84b of the axial recessed portion 84, and the oil receiving member 80 is disposed in the radial gap 84c. The axial recessed portion 84 in the present embodiment is formed between the output member 48 and the wheel member 52, which are a part of the rotating body 60.

The oil receiving member 80 includes a receiving recessed portion 88 having a concave shape for receiving the lubricant 64. The receiving recessed portion 88 in the present embodiment is formed inside the axial wall portion 80a and the outer wall portion 80b. The receiving recessed portion 88 in the present embodiment is configured as an annularly continuous groove portion. The receiving recessed portion 88 forms an oil reservoir 90 that stores the lubricant 64 received by the oil receiving member 80. The oil reservoir 90 in the present embodiment is provided below a lower end position Pa at an inner peripheral end portion of the outer wall portion 80b of the oil receiving member 80.

The receiving recessed portion 88 includes a bottom surface portion 88a and a pair of side surface portions 88b and 88c provided on both sides of the bottom surface portion 88a in the axial direction. The pair of side surface portions 88b and 88c include an inner surface portion 88b on the mating member 82, which is provided integrally with the oil receiving member 80, and an outer surface portion 88c on the side opposite to the mating member 82. In the present embodiment, the inner surface portion 88b is composed of the mating member 82, and the outer surface portion 88c is composed of the oil receiving member 80. As described above, the receiving recessed portion 88 of the oil receiving member 80 may be at least partially constituted by the oil receiving member 80, and partially constituted by the mating member 82.

The wheel drive device 10 includes a lubricant propagation member 91 through which the lubricant 64 that has leaked from the seal member 68 propagates. In Fig. 3, a propagation path of the lubricant 64 is schematically indicated by an arrow Da. The lubricant propagation member 91 is a casing 28 and forms the above-described axial recessed portion 84 in the present embodiment. The lubricant 64 that has leaked from the seal member 68 propagates through an outer surface portion of the lubricant propagation member 91 by at least its own weight. The lubricant propagation member 91 includes, as a propagation location of the lubricant 64, an outer surface portion 91a located outwardly in the radial direction from the seal member 68 and an axial surface portion 91c that extends inwardly in the axial direction from an outer peripheral edge portion 91b of the outer surface portion 91a. The axial surface portion 91c is provided with the upper surface portion 84a of the axial recessed portion 84 forming the radial gap 84c. The oil receiving member 80 is disposed below the propagation location of such lubricant 64, and can receive the lubricant 64 dripping from the propagation location.

The lubricant propagation member 91 includes a guide portion 92 provided on the axial surface portion 91c that is a position facing the oil receiving member 80 inwardly in the radial direction. The guide portion 92 includes a large outer diameter portion 92a provided on the axial surface portion 91c and a small outer diameter portion 92b provided on the axial surface portion 91c inwardly in the axial direction from the large outer diameter portion 92a. An outer diameter R92b of the small outer diameter portion 92b is smaller than an outer diameter R92a of the large outer diameter portion 92a. The guide portion 92 in the present embodiment is configured by providing a recessed portion in the axial surface portion 91c at a location of the small outer diameter portion 92b. In addition, it may be configured by providing a protrusion at a location of the axial surface portion 91c that becomes the large outer diameter portion 92a, or may be configured by gradually reducing the outer diameter of the axial surface portion 91c inwardly in the axial direction. In the present embodiment, the large outer diameter portion 92a and the small outer diameter portion 92b constituting the guide portion 92 are provided in a range over the entire circumference of the axial surface portion 91c.

When the lubricant 64 tries to propagate inwardly in the axial direction in the axial surface portion 91c of the lubricant propagation member 91, it becomes difficult for the lubricant 64 to climb from the large outer diameter portion 92a to the small outer diameter portion 92b. Therefore, the lubricant 64 can be held by the large outer diameter portion 92a of the guide portion 92 by blocking the propagation of the lubricant 64 in the large outer diameter portion 92a of the guide portion 92. The guide portion 92 can guide the lubricant 64 held by itself to the oil receiving member 80 in a direction Db by separating the lubricant 64 by its own weight, rotation, or the like. That is, the guide portion 92 of the lubricant propagation member 91 holds the lubricant 64 by blocking the propagation of the lubricant 64 at a position facing the oil receiving member 80 inwardly in the radial direction, and guides the held lubricant 64 to the oil receiving member 80 by separating it.

Accordingly, it is possible to reduce the amount of the lubricant 64 that tries to pass inwardly in the axial direction at a position that faces the oil receiving member 80 inwardly in the radial direction in the lubricant propagation member 91. In this example, the lubricant 64 trying to pass inwardly in the axial direction leaks into the external space 94 after passing through the upper surface portion 84a of the axial recessed portion 84, the bottom portion, the lower surface portion 84b, and the side surface portion of the wheel member 52, as indicated by an arrow Dc. That is, after passing through the position facing the oil receiving member 80 inwardly in the radial direction in the lubricant propagation member 91, the lubricant 64 leaks into the external space 94 after passing through an outer surface portion of a member (here, the wheel member 52) that is integrated with the lubricant propagation member 91 below the oil receiving member 80. By providing the above-described guide portion 92, it is possible to reduce the amount of the lubricant 64 leaking into the external space 94.

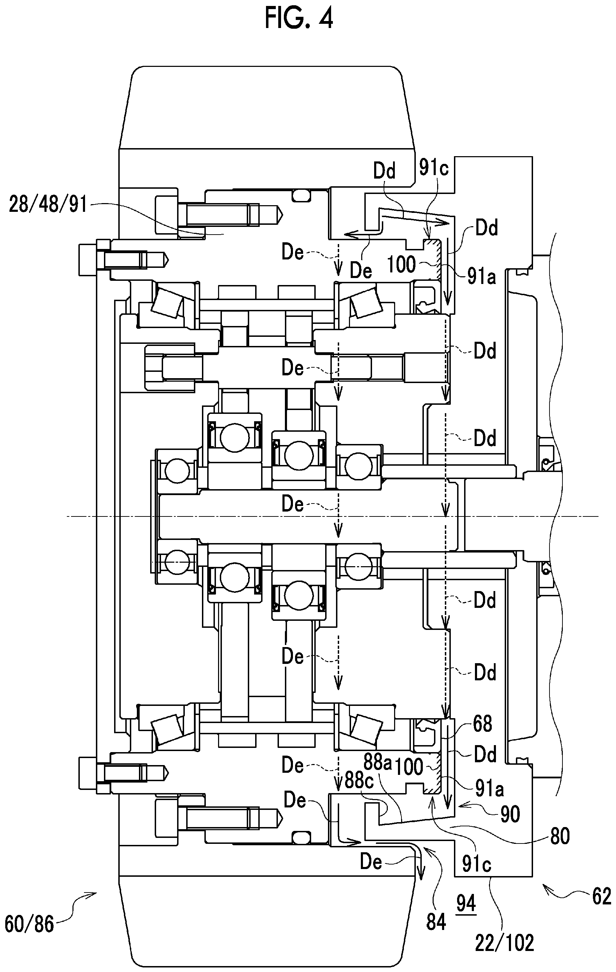

Fig. 4 is referred to. In Fig. 4, hatching is applied to a part of a propagation location 100 of the lubricant 64 that has leaked from the seal member 68. The lubricant propagation member 91 in the present embodiment is a part of the rotating body 60. Therefore, the lubricant 64 that has leaked from the seal member 68 propagates to a range continuous in the circumferential direction from the propagation location of the lubricant 64 by its own weight in the lubricant propagation member 91, by the rotation of the lubricant propagation member 91. The propagation location 100 of the lubricant 64 due to this rotation includes the outer surface portion 91a and an axial surface portion 91c of the lubricant propagation member 91 located outwardly in the radial direction from the seal member 68. The oil receiving member 80 of the present embodiment is provided in an annular shape so as to surround the propagation location 100 of the lubricant 64 which is a part of the lubricant propagation member 91 from the outside in the radial direction. Accordingly, when the lubricant 64 splashes from the propagation location 100 of the lubricant 64 of the lubricant propagation member 91 by the rotation of the rotating body 60, it is possible to receive the lubricant 64 by the oil receiving member 80. As a result, leakage of the splashed lubricant 64 into the external space 94 can be suppressed.

Effects of the wheel drive device 10 described above will be described.

At least a part of the oil receiving member 80 is disposed inside the axial recessed portion 84 formed in one of the rotating body 60 and the fixed body 62. Therefore, as compared with a case where the axial recessed portion 84 is not formed in the recessed portion forming body 86, an axial dimension L80 (refer to Fig. 3) of the oil receiving member 80 can be increased by the amount of the oil receiving member 80 disposed in the axial recessed portion 84, and the storage volume of the lubricant can be increased accordingly. Here, the ability to increase the storage volume of the lubricant means that the volume of the oil reservoir 90 of the oil receiving member 80 can be increased. Further, as compared with a case where the axial dimension L90 of the same oil receiving member 80 is secured without forming the axial recessed portion 84 in the recessed portion forming body 86, the axial dimension of the entire wheel drive device 10 can be reduced. As a result, it is possible to reduce the axial dimensions of the entire wheel drive device 10 while increasing the storage volume of the lubricant by the oil receiving member 80.

The oil receiving member 80 is provided on the attachment member 22. Accordingly, a part of the heat generated by the motor 16 and the speed reducer 18 and transmitted to the attachment member 22 can be transmitted to the oil receiving member 80 from the attachment member 22. Therefore, a surface area contributing to heat radiation to the air can be increased by the amount of the oil receiving member 80. As a result, the amount of heat that is released to the air directly from the attachment member 22 and the oil receiving member 80 without passing through the vehicle body 12 can be increased, and the heat radiation of the wheel drive device 10 can be improved. In addition, since the amount of heat transmitted from the attachment member 22 to the vehicle body 12 out of the heat transmitted to the attachment member 22 can be reduced, the influence on the vehicle body 12 due to the heat generated by the motor 16 or the like can be reduced.

As described above, the oil receiving member 80 in the present embodiment functions as a heat radiating member for receiving a part of the heat transmitted to the attachment member 22 and radiating the heat to the external space 94. From such a viewpoint, a part of the oil receiving member 80 may be provided at a position exposed to the external space 94 when viewed from the radial direction. Here, a part of the oil receiving member 80 means the axial wall portion 80a of the oil receiving member 80 in the present embodiment.

The oil receiving member 80 is provided on the fixed body 62. Accordingly, the oil receiving member 80 can be maintained in a stationary state when the wheel 20 rotates, so that a state in which the lubricant 64 is stored can be stably maintained by the oil receiving member 80 without spilling.

Next, other features of the wheel drive device 10 will be described. Fig. 4 is referred to. The wheel drive device 10 includes a facing member 102 that is disposed to face the lubricant propagation member 91 that is a part of the rotating body 60 in the axial direction. The facing member 102 in the present embodiment is the attachment member 22 provided with the oil receiving member 80, and is a part of the fixed body 62. The facing member 102 is also disposed to face not only the lubricant propagation member 91 but also the seal member 68 in the axial direction. The bottom surface portion 88a of the oil receiving member 80 is inclined inwardly in the radial direction toward the facing member 102 in the axial direction. Advantages regarding the above will be described.

A case where the lubricant 64 which is splashed upward from the axial surface portion 91c of the lubricant propagation member 91 by the rotation of the rotating body 60 above the seal member 68 is received by the oil receiving member 80 is considered. In Fig. 4, two propagation paths of the lubricant 64, which is splashed upward in this way, are schematically indicated by arrows Dd and De. The propagation path in the present embodiment is indicated by the arrow Dd, and the propagation path in the reference embodiment is indicated by the arrow De. A solid line arrow in Fig. 4 indicates that the lubricant 64 propagates at a location visible in Fig. 4, and a broken line arrow indicates that the lubricant 64 propagates at a hidden location in Fig. 4.

The structure (not illustrated) of the reference embodiment assumes a case where the bottom surface portion 88a of the oil receiving member 80 is not inclined and is parallel to the axial direction. In this case, a case where the lubricant 64, which is received by the bottom surface portion 88a of the oil receiving member 80 and is splashed upward, propagates on a side opposite to the facing member 102 in the axial direction is considered. In this case, as illustrated by the arrow De in Fig. 4, as the lubricant 64 drips downward from the outer surface portion 88c of the oil receiving member 80, the lubricant 64 returns to the axial surface portion 91c of the lubricant propagation member 91. As a result, after propagating from an upper portion to a lower portion of the axial surface portion 91c of the lubricant propagation member 91, the lubricant 64 propagates below the oil receiving member 80, and a risk that the lubricant 64 leaks to the external space 94 is increased.

In this regard, according to the present embodiment, the bottom surface portion 88a of the oil receiving member 80 is inclined to approach inwardly in the radial direction toward the facing member 102. Therefore, as illustrated by the arrow Dd, the lubricant 64 received by the bottom surface portion 88a of the oil receiving member 80 above the seal member 68 can be guided to a side of the facing member 102 by its own weight. The lubricant 64 guided to the side of the facing member 102 in this manner propagates downward on the side surface portion of the facing member 102, and then is guided to the oil reservoir 90 of the oil receiving member 80. That is, in a case where the lubricant 64, which is splashed upward, is received by the bottom surface portion 88a of the oil receiving member 80, after propagating the side surface portion of the facing member 102, it can be guided to the oil reservoir 90 of the oil receiving member 80. As a result, the lubricant 64, which is splashed upward, propagates to the side opposite to the facing member 102, so that it is possible to avoid a situation in which the lubricant 64 leaks to the external space 94.

Next, modification examples of each component described so far will be described.

Specific examples of the speed reducer 18 are not particularly limited, and various reduction mechanisms can be applied, such as a bending meshing type speed reducer, a simple planetary gear type speed reducer, a traction drive, or the like, in addition to the eccentric oscillation type speed reducer. The type of the eccentric oscillation type speed reducer is not particularly limited. As an example of this, the center crank type in which the crankshaft (input shaft 24) is disposed on the rotation center line of the wheel 20 has been described in the embodiment. In addition to this, it may be a distribution type in which a plurality of crankshafts are disposed at positions offset in the radial direction from the rotation center line of the wheel 20. The type of the bending meshing type speed reducer is not particularly limited, and may be, for example, a cup type having one internal gear, a silk hat type, or the like in addition to a tubular type having two internal gears.

The axial recessed portion 84 may be formed in any one of the rotating body 60 and the fixed body 62. The axial recessed portion 84 may be formed in the fixed body 62 in place of the rotating body 60. It is assumed that, for example, a case where the axial recessed portion 84 is formed in the attachment member 22 that is the fixed body 62. In addition to this, the axial recessed portion 84 may be formed in only one of the output member 48 and the wheel member 52, which are the rotating body 60. In addition, the output member 48 and the wheel member 52 may be integrally molded, in addition to a case where the output member 48 and the wheel member 52 are separately provided as in the embodiment.

Specific examples of the position and shape of the oil receiving member 80 are not particularly limited as long as the lubricant that has leaked beyond the seal member 68 can be received. For example, the oil receiving member 80 may be disposed only below the propagation location of the lubricant 64 by its own weight in the lubricant propagation member 91. In this case, for example, the oil receiving member 80 may form a continuous arc shape in a circumferential range of about half a circumference below the propagation location of the lubricant 64 by its own weight. The bottom surface portion 88a of the oil receiving member 80 may not be inclined, or may be inclined outwardly in the radial direction toward the facing member 102.

An example in which the mating member 82 provided with the oil receiving member 80 is a part of the fixed body 62 has been described, but the mating member 82 may be a part of the rotating body 60. For example, it is assumed that the oil receiving member 80 is provided in any one of the output member 48 and the wheel member 52, which are a part of the rotating body 60.

The lubricant propagation member 91 may be a member integrated with the casing 28 (for example, the wheel member 52) in place of the casing 28. In addition, in a case where the lubricant propagation member 91 is the casing 28, the casing 28 may be a part of either the rotating body 60 or the fixed body 62.

### Brief Description of the Reference Symbols

- 10: wheel drive device
- 12: vehicle body
- 16: motor
- 18: speed reducer
- 20: wheel
- 22: attachment member
- 48: output member
- 52: wheel member
- 60: rotating body
- 62: fixed body
- 64: lubricant
- 66: sealing space
- 68: seal member
- 80: oil receiving member
- 84: axial recessed portion
- 92: guide portion
- 102: facing member

## Claims

1. A wheel drive device (10) that drives a wheel (20), comprising:
a rotating body (60) including the wheel (20);
a fixed body (62) in which the rotating body (60) rotates relative to the fixed body (62);
a seal member (68) that is disposed between the rotating body (60) and the fixed body (62) and that seals a sealing space (66) containing a lubricant (64);
an oil receiving member (80) that receives the lubricant (64) that has leaked beyond the seal member (68); and
wherein at least a part of the oil receiving member (80) is disposed inside an axial recessed portion (84) formed in one of the rotating body (60) and the fixed body (62), **characterized in that** the wheel drive device further comprises a guide portion (92) that is provided at a position facing the oil receiving member (80) inwardly in a radial direction and that guides the lubricant (64) to the oil receiving member (80).

2. A wheel drive device (10) that drives a wheel (20), comprising:
a rotating body (60) including the wheel (20);
a fixed body (62) in which the rotating body (60) rotates relative to the fixed body (62);
a seal member (68) that is disposed between the rotating body (60) and the fixed body (62) and that seals a sealing space (66) containing a lubricant (64);
an oil receiving member (80) that receives the lubricant (64) that has leaked beyond the seal member (68);
a lubricant propagation member (91) through which the lubricant (64) that has leaked from the seal member (68) propagates and which is a part of the rotating body (60); and
a facing member (102) that is disposed to face the lubricant propagation member (91) in an axial direction and that is provided with the oil receiving member (80),
wherein at least a part of the oil receiving member (80) is disposed inside an axial recessed portion (84) formed in one of the rotating body (60) and the fixed body (62),
the oil receiving member (80) is provided in an annular shape,
the oil receiving member (80) is provided in the annular shape so as to surround a part of the lubricant propagation member (91), **characterized in that**
a bottom surface portion (88a) of the oil receiving member (80) is inclined inwardly in a radial direction toward the facing member (102) in the axial direction.

3. The wheel drive device (10) according to claim 1, further comprising:
an attachment member (22) that is disposed between a motor and a speed reducer and that is attached to a vehicle body (12),
wherein the oil receiving member (80) is provided on the attachment member (22).

4. The wheel drive device (10) according to claim 1,
wherein the oil receiving member (80) is provided on the fixed body (62).

5. The wheel drive device (10) according to claim 1,
wherein the rotating body (60) includes a wheel member (52) and an output member (48) that rotates integrally with the wheel member (52), and
the axial recessed portion (84) is provided between the wheel member (52) and the output member (48).

## Patentansprüche

1. Radantriebsvorrichtung (10), die ein Rad (20) antreibt, umfassend:
einen Drehkörper (60), der das Rad (20) umfasst;
einen feststehenden Körper (62), in dem der Drehkörper (60) relativ zu dem feststehenden Körper (62) dreht;
ein Dichtungselement (68), das zwischen dem Drehkörper (60) und dem feststehenden Körper (62) angeordnet ist und das einen Dichtungsraum (66), der ein Schmiermittel (64) enthält, abdichtet;
ein Ölaufnahmeelement (80), das das Schmiermittel (64) aufnimmt, das über das Dichtungselement (68) hinaus ausgetreten ist; und
wobei zumindest ein Teil des Ölaufnahmeelements (80) innerhalb eines axial vertieften Abschnitts (84) angeordnet ist, der in einem von dem Drehkörper (60) und dem feststehenden Körper (62) gebildet ist, **dadurch gekennzeichnet, dass** die Radantriebsvorrichtung ferner einen Führungsabschnitt (92) umfasst, der an einer dem Ölaufnahmeelement (80) nach innen in einer Radialrichtung zugewandten Position vorgesehen ist und der das Schmiermittel (64) zu einem Ölaufnahmeelement (80) führt.

2. Radantriebsvorrichtung (10), die ein Rad (20) antreibt, umfassend:
einen Drehkörper (60), der das Rad (20) umfasst;
einen feststehenden Körper (62), in dem der Drehkörper (60) relativ zu dem feststehenden Körper (62) dreht;
ein Dichtungselement (68), das zwischen dem Drehkörper (60) und dem feststehenden Körper (62) angeordnet ist und das einen Dichtungsraum (66) abdichtet, der ein Schmiermittel (64) enthält;
ein Ölaufnahmeelement (80), das das Schmiermittel (64) aufnimmt, das über das Dichtungselement (68) hinaus ausgetreten ist;
ein Schmiermittelausbreitungselement (91), durch das sich das Schmiermittel (64), das aus dem Dichtungselement (68) ausgetreten ist, ausbreitet und das ein Teil des Drehkörpers (60) ist; und
ein zugewandtes Element (102), das so angeordnet ist, dass es dem Schmiermittelausbreitungselement (91) in einer Axialrichtung zugewandt ist und das mit dem Ölaufnahmeelement (80) versehen ist,
wobei zumindest ein Teil des Ölaufnahmeelements (80) innerhalb eines axial vertieften Abschnitts (84) angeordnet ist, der in einem von dem Drehkörper (60) und dem feststehenden Körper (62) gebildet ist,
das Ölaufnahmeelement (80) in einer ringförmigen Form gebildet ist,
das Ölaufnahmeelement (80) in der ringförmigen Form vorgesehen ist, um einen Teil des Schmiermittelausbreitungselements (91) zu umgeben,
**dadurch gekennzeichnet, dass** ein unterer Oberflächenabschnitt (88a) des Ölaufnahmeelement (80) in einer Radialrichtung nach innen in Richtung des zugewandten Elements (102) in der Axialrichtung geneigt ist.

3. Radantriebsvorrichtung (10) nach Anspruch 1, ferner umfassend:
ein Anbringungselement (22), das zwischen einem Motor und einem Untersetzungsgetriebe angeordnet ist und an einer Fahrzeugkarosserie (12) angebracht ist,
wobei das Ölaufnahmeelement (80) an dem Anbringungselement (22) vorgesehen ist.

4. Die Radantriebsvorrichtung (10) nach Anspruch 1,
wobei das Ölaufnahmeelement (80) an dem feststehenden Körper (62) vorgesehen ist.

5. Radantriebsvorrichtung (10) nach Anspruch 1,
wobei der Drehkörper (60) ein Radelement (52) und ein Abtriebselement (48) umfasst, das sich integral mit dem Radelement (52) dreht, und
der axial vertiefte Abschnitt (84) zwischen dem Radelement (52) und dem Abtriebselement (48) vorgesehen ist.

## Revendications

1. Un dispositif d'entraînement de roue (10) qui entraîne une roue (20), comprenant :
un corps rotatif (60) comprenant la roue (20) ;
un corps fixe (62) dans lequel le corps rotatif (60) tourne par rapport au corps fixe (62) ;
un élément de joint d'étanchéité (68) qui est disposé entre le corps rotatif (60) et le corps fixe (62) et qui scelle un espace d'étanchéité (66) contenant un lubrifiant (64) ;
un élément de réception d'huile (80) qui reçoit le lubrifiant (64) qui a fui au-delà de l'élément de joint d'étanchéité (68) ; et
dans lequel
au moins une partie de l'élément de réception d'huile (80) est disposée à l'intérieur d'une partie évidée axiale (84) formée dans l'un parmi le corps rotatif (60) et le corps fixe (62), **caractérisé en ce que** le dispositif d'entraînement de roue comprend en outre une partie de guidage (92) qui est prévue dans une position faisant face à l'élément de réception d'huile (80) vers l'intérieur dans une direction radiale et qui guide le lubrifiant (64) vers l'élément de réception d'huile (80).

2. Un dispositif d'entraînement de roue (10) qui entraîne une roue (20), comprenant :
un corps rotatif (60) comprenant la roue (20) ;
un corps fixe (62) dans lequel le corps rotatif (60) tourne par rapport au corps fixe (62) ;
un élément de joint d'étanchéité (68) qui est disposé entre le corps rotatif (60) et le corps fixe (62) et qui scelle un espace d'étanchéité (66) contenant un lubrifiant (64) ;
un élément de réception d'huile (80) qui reçoit le lubrifiant (64) qui a fui au-delà de l'élément de joint d'étanchéité (68) ;
un élément de propagation de lubrifiant (91) à travers lequel le lubrifiant (64) qui a fui de l'élément d'étanchéité (68) se propage et qui fait partie du corps rotatif (60) ; et
un élément en vis-à-vis (102) qui est disposé pour faire face à l'élément de propagation de lubrifiant (91) dans une direction axiale et qui est prévu avec l'élément de réception d'huile (80),
dans lequel
au moins une partie de l'élément de réception d'huile (80) est disposée à l'intérieur d'une partie évidée axiale (84) formée dans l'un parmi le corps rotatif (60) et le corps fixe (62),
l'élément de réception d'huile (80) est prévu dans une forme annulaire,
l'élément de réception d'huile (80) est prévu dans la forme annulaire afin d'entourer une partie de l'élément de propagation de lubrifiant (91), **caractérisé en ce que** :
une partie de surface inférieure (88a) de l'élément de réception d'huile (80) est inclinée vers l'intérieur dans une direction radiale vers l'élément en vis-à-vis (102) dans la direction axiale.

3. Le dispositif d'entraînement de roue (10) selon la revendication 1, comprenant en outre :
un élément de fixation (22) qui est disposé entre un moteur et un réducteur de vitesse et qui est fixé sur une carrosserie de véhicule (12),
dans lequel l'élément de réception d'huile (80) est prévu sur l'élément de fixation (22).

4. Le dispositif d'entraînement de roue (10) selon la revendication 1,
dans lequel l'élément de réception d'huile (80) est prévu sur le corps fixe (62).

5. Le dispositif d'entraînement de roue (10) selon la revendication 1,
dans lequel le corps rotatif (60) comprend un élément de roue (52) et un élément de sortie (48) qui tourne de manière solidaire avec l'élément de roue (52), et
la partie évidée axiale (84) est prévue entre l'élément de roue (52) et l'élément de sortie (48).
